# EUROPÄISCHE PATENTANMELDUNG

(11) **EP 3 731 100 A1**
(43) Veröffentlichungstag der Anmeldung: **28.10.2020**
(21) Anmeldenummer: 19171110.0
(22) Anmeldetag: 25.04.2019
(51) Int. Cl.: G06F 11/16, G09G 5/00

(54) **VERFAHREN UND VORRICHTUNG ZUR DARSTELLUNG EINER SICHERHEITSRELEVANTEN INFORMATION AUF EINEM DISPLAY**

(71) Anmelder: RAFI GmbH & Co. KG, 88276 Berg (DE)
(72) Erfinder: Ummenhofer, Benjamin, 88356 Ostrach (DE); Fleischer, Frank, 88368 Bergatreute (DE); Waldraff, Sebastian, 88213 Ravensburg (DE)
(74) Vertreter: Engelhardt, Volker

(57) **Zusammenfassung**

Bei einem Verfahren zur Darstellung einer sicherheitsrelevanten Information auf einem Display (2), das mindestens eine elektrisch erfassbare Betriebsgröße (S₁ bis Sₙ) von einer Auswerteeinrichtung (8) erhält, die insbesondere an Fahrzeuge, Werkzeugmaschinen (7) oder elektrischen Geräten angeschlossen ist, soll permanent und ohne zeitliche Verzögerung ein Kontrollabgleich zwischen der Anzeigesituation auf dem Display (2) und der tatsächlichen Betriebsgröße bspw. einer Werkzeugmaschine oder einem Fahrzeug stattfinden.

Das ist dadurch erreicht, dass die Verfahrensschritte wie folgt gekennzeichnet sind:
- Zuordnen einer in einer Datenbank (11) hinterlegten Abbildung (12₁ bis 12ₙ) mit der von der Auswerteeinrichtung (8) ermittelten Betriebsgröße (S₁ bis Sₙ),
- Weiterleiten der Abbildung (12₁ bis 12ₙ) an das Display (2), gegebenenfalls Verändern des zur Verfügung gestellten Abbildung (12₁ bis 12ₙ) aus der Datenbank (11) in Abhängigkeit von Veränderungen der Betriebsgröße (S₁ bis Sₙ),
- Übermitteln der Betriebsgröße (S₁ bis Sn) durch die Auswerteeinrichtung (8) an ein Überwachungsgerät (14),
- Ablesen von Kontrollsymbolen (13₁ bis 13ₙ) durch das Überwachungsgerät (14), die auf den Abbildungen (12₁ bis 12ₙ) vorgesehen sind und die einer bestimmten Betriebsgröße (S₁ bis Sₙ) zugeordnet sind und
- Vergleichen der von der Abbildung (12₁ bis 12ₙ) abgelesenen Kontrollsymbole (13₁ bis 13ₙ) mit einer in dem Überwachungsgerät (14) hinterlegten Vergleichssymbol (17₁ bis 17ₙ) bezogen auf die jeweilige tatsächliche Betriebsgröße (S₁ bis Sn).

## Beschreibung

Die Erfindung bezieht sich auf ein Verfahren zur Darstellung einer sicherheitsrelevanten Information auf einem Display nach dem Oberbegriff des Patentanspruchs 1 sowie auf eine Vorrichtung zur Durchführung des Verfahrens nach dem Oberbegriff des Patentanspruchs 3.

Durch die EP 2 273 369 B2 ist ein solches Verfahren und eine solche Vorrichtung bekannt geworden, durch die Eingangsgrößen in einer Rechnereinheit rechentechnisch verarbeitet werden. Dabei werden die rechentechnisch bearbeiteten Eingangsgrößen in eine Bilddatensequenz umgewandelt, die an eine Anzeigevorrichtung, also ein Display, weitergeleitet und von diesem dargestellt sind. Die sicherheitsrelevante Verarbeitung der Eingangsgröße wird anschließend von einer Prüfeinheit vorgenommen, durch die die Sicherheitsüberprüfung durchgeführt ist. Hierzu sind die Recheneinheit und die Prüfeinheit voneinander getrennt und führen eigenständige Verarbeitungsschritte durch.

Als nachteilig bei diesen Verfahren bzw. Vorrichtungen hat sich herausgestellt, dass für jede Eingangsgröße ein Prüfcode zu erstellen ist, der anschließend mit einem in der Prüfeinheit hinterlegten Vergleichscode zu vergleichen ist. Anschließend wird der derart ermittelte Vergleichscode mit dem Wert der Eingangsgröße verglichen, so dass entweder ein positives oder negatives Prüfergebnis in der Prüfeinheit zur Veranlassung einer sicherheitsgerichteten Reaktion erfolgt. Diese Rechenschritte sind zeit-intensiv, so dass oftmals aufgrund der zeitlichen Verzögerung nicht rechtzeitig ein Fehler an der Anzeigesituation des Displays festgestellt ist.

Zudem sind solche elektrotechnisch vorzunehmenden Prüf- und Vergleichsschritte äußerst fehleranfällig, denn wenn eines der technisch erforderlichen Bauteile ausfällt oder deren Verbindung gestört ist, kann das Prüfen und Vergleichen nicht vorgenommen werden.

Es ist daher Aufgabe der Erfindung, ein Verfahren sowie eine Vorrichtung der Eingangs genannten Gattung zur Verfügung zu stellen, durch die permanent und ohne zeitliche Verzögerung ein Kontrollabgleich zwischen der Anzeigesituation auf dem Display und der tatsächlichen Betriebsgröße bspw. einer Werkzeugmaschine oder einem Fahrzeug stattfindet.

Diese Aufgabe ist durch die Verfahrensschritte des kennzeichnenden Teils von Patentanspruch 1 und im Hinblick auf die Vorrichtung zur Durchführung des Verfahrens durch die Merkmale des kennzeichnenden Teils von Patentanspruch 3 gelöst.

Weitere vorteilhafte Weiterbildungen der Erfindung ergeben sich aus den Unteransprüchen.

Durch die Verfahrensschritte, Zuordnen einer in einer Datenbank hinterlegten Abbildung mit der von der Auswerteeinrichtung ermittelten Betriebsgröße, Weiterleiten der Abbildung an das Display, gegebenenfalls Verändern des zur Verfügung gestellten Abbildung aus der Datenbank in Abhängigkeit von Veränderungen der Betriebsgröße, Übermitteln der Betriebsgröße durch die Auswerteeinrichtung an ein Überwachungsgerät, Ablesen von Kontrollsymbolen durch das Überwachungsgerät, die auf den Abbildungen vorgesehen sind und die einer bestimmten Betriebsgröße zugeordnet sind und Vergleichen der von der Abbildung abgelesenen Kontrollsymbolen mit einer in dem Überwachungsgerät hinterlegten Vergleichssymbol bezogen auf die jeweilige tatsächliche Betriebsgröße, ist erreicht, dass eine statische Abbildung, die die erhaltenen Betriebsgröße wiedergibt, auf dem Display angezeigt und beim Verändern der Betriebsgröße entsprechend ausgetauscht werden kann und gleichzeitig eine statische Kontrollabfrage zwischen der tatsächlichen Anzeigesituation des Displays mit der tatsächlichen Betriebsgröße ermöglicht ist, ohne dass Rechen- oder Prüfschritte vorzunehmen sind. Lediglich die übermittelten Kontrollsymbole sind durch das Überwachungsgerät mit den dort hinterlegten Kontrollsymbolen zu vergleichen, wobei die Kontrollsymbole den tatsächlichen Betriebsgrößen zugeordnet sind.

Dadurch, dass zwischen der Auswerteeinrichtung und dem Display eine Datenbank zwischengeschaltet ist, in der für jede Betriebsgröße eine Abbildung hinterlegt ist, dass jede der Abbildungen ein Kontrollsymbol aufweist, das der eingelesenen Betriebsgröße zugeordnet ist, dass die Auswerteeinrichtung elektrisch mit einem Überwachungsgerät verbunden ist, das von der Auswerteeinrichtung die tatsächliche elektrische Betriebsgröße erhält, dass die mit der übermittelten Betriebsgröße übereinstimmende Abbildung an das Display weitergeleitet ist, dass in dem Überwachungsgerät eine Datenbank hinterlegt ist, die für jede eingegebene Betriebsgröße ein Vergleichssymbol aufweist, das jeweils mit dem Kontrollsymbol des Displays in dem Überwachungsgerät verglichen ist, steht eine Vorrichtung zur Verfügung, die einen elektrotechnischen einfachen Aufbau aufweist und gleichzeitig einen zuverlässigen Abgleich zwischen der tatsächlichen Anzeigesituation auf dem Display und der tatsächlichen Betriebsgröße ermöglicht. Sobald nämlich die tatsächliche Anzeigesituation des Displays aufgrund des Vergleiches zwischen den Kontroll- und Vergleichssymbolen voneinander abweichen, kann ohne Zeitverzögerung das Display abgeschaltet und/oder eine akustisch wahrnehmbare Fehlermeldung generiert werden, oder die komplette Maschine abgeschaltet werden.

Vorteilhafterweise sind jeder Betriebsgröße eine entsprechende Abbildung zugeordnet, die von der Auswerteeinrichtung an das Display übermittelt wird. Auf jeder Abbildung sind dabei Kontrollsymbole aufgedruckt, die von einer Leseeinrichtung im Rahmen des Displays erfasst und in entsprechende elektrische Signale umgewandelt sind. Die Leseeinrichtung steht dabei in elektrischer Verbindung mit dem Überwachungsgerät und übermittelt ausschließlich die erhaltenen Farb- oder Lichtsignale an das Überwachungsgerät. Diese unterschiedlichen Farb- oder Lichtsignale entsprechen dabei den auf dem Display angezeigten Betriebsgrößen und werden durch das Überwachungsgerät den dort gespeicherten und den tatsächlichen Betriebsgrößen entsprechenden Vergleichssymbol gegenübergestellt. Sollten dabei die eingegangenen Kontrollsymbole mit dem Vergleichssymbol für die tatsächliche Betriebsgröße nicht übereinstimmen, erfolgt ein Abschalten des Displays und/oder es entsteht eine akustisch wahrnehmbare Fehlermeldung. Umfangreiche Rechen- oder Prüfschritte für den Abgleich der Anzeigesituation mit der tatsächlichen Betriebsgröße entfallen demnach vollständig.

In der Zeichnung ist ein erfindungsgemäßes Ausführungsbeispiel dargestellt, das nachfolgend näher erläutert ist. Im Einzelnen zeigt:
- Figur 1: eine Vorrichtung zur Durchführung eines Verfahrens zur Darstellung von sicherheitsrelevanten Informationen auf einem Display, dessen Anzeigesituation, die die von einem Fahrzeug oder Werkzeugmaschine erhaltenen Betriebsgrößen wiedergibt und die in einem Überwachungsgerät verglichen ist, wobei die Anzeigesituation mittels Abbildungen erfolgt, die unterschiedliche Kontrollsymbole aufweisen, in schematischer Ansicht,
- Figur 2: das Display gemäß Figur 1 im Schnitt mit einer im Rahmen des Displays vorgesehenen Leseeinrichtung, die elektrisch mit dem Überwachungsgerät verbunden ist und die fluchtend zu einem der Anzeigesituation des Displays zugeordneten Kontrollsymbol angeordnet ist, und
- Figur 3: die Vorrichtung gemäß Figur 1 mit einem andersartig ausgestalteten Kontrollsymbol.

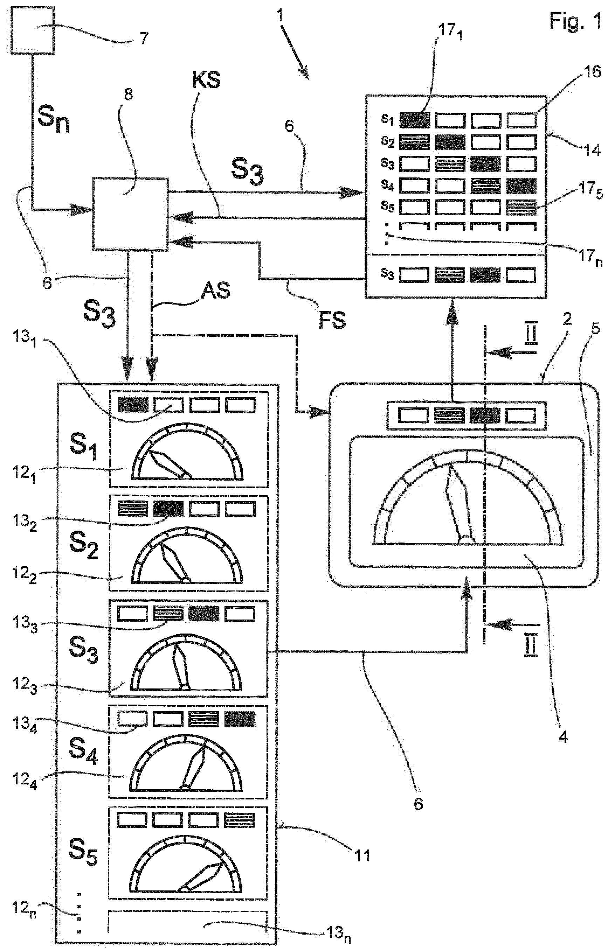

Die in den Figuren 1 bis 3 dargestellte Vorrichtung 1 besteht aus einem Display 2, einer Auswerteeinrichtung 8 sowie einem Überwachungsgerät 14. Dabei stellt die Auswerteeinrichtung 8 eine elektrische Schnittstelle zwischen dem Display 2 und dem Überwachungsgerät 14 dar und ist mit beiden elektrisch verbunden. Durch die Vorrichtung 1 soll ein Verfahren zur Darstellung von sicherheitsrelevanten Informationen auf dem Display 2 und gleichzeitig eine permanente sowie zuverlässige Überprüfung der Anzeigesituation des Displays 2 mithilfe des Überwachungsgerätes 14 durchführbar sein.

Das Display 2 umfasst einen Bildschirm 4 und einen Rahmen 5, durch den der Bildschirm 4 lageorientiert gehalten ist. Die elektrischen Verbindungen zwischen dem Display 2, der Auswerteeinrichtung 8 und dem Überwachungsgerät 14 erfolgt über elektrische Leitungen 6.

Des Weiteren ist die Auswerteeinrichtung 8 über die elektrischen Leitung 6 mit einer schematisch dargestellten Werkzeugmaschine 7 verbunden. Allerdings können auch Fahrzeuge oder sonstige elektrische Geräte an die Auswerteeinrichtung 8 angeschlossen sein. Durch die Werkzeugmaschine 7 werden elektrische Betriebsgrößen S₁ bis Sₙ generiert, die visuell durch das Display 2 einem Benutzer anzuzeigen sind, um den Betriebszustand der Werkzeugmaschinen 7 erkennen zu können. Oftmals handelt es sich hierbei um sicherheitsrelevante Informationen, wie beispielsweise Geschwindigkeiten, Drehzahlen von Motoren oder Wellen, Temperaturen oder dergleichen. Sollte auf den Bildschirm 4 des Displays 2 eine Betriebsgröße S₁ bis Sₙ dargestellt sein, die mit der tatsächlichen Betriebsgröße S₃ der Werkzeugmaschine 7 nicht übereinstimmt, entstehen Gefahrensituationen, die durch diese Erfindung ausgeschlossen werden sollen.

Falls nämlich die Funktion des Displays 2 und/oder die Signalübertragung zwischen der Werkzeugmaschine 7 und dem Display 2 gestört sein sollte, ist es erforderlich, diesen Fehler unverzüglich zu erkennen. Ein eingefrorenes Display 2 kann folglich zu erheblichen Unfallgefahren führen, denn die tatsächliche Betriebssituation der Werkzeugmaschine 7 stimmt dann mit der Anzeigesituation auf dem Display 2 nicht überein.

Zunächst werden demnach die tatsächlichen Betriebsgrößen S₁ bis Sₙ von der Werkzeugmaschine 7 an die Auswerteeinrichtung 8 übertragen, die diese Betriebsgrößen S₁ bis Sₙ in ein vorgegebenes elektrisches Signal S₃ umwandelt. Diese konkrete Betriebsgröße S₃ wird anschließend an eine Datenbank 11 weitergeleitet, die zwischen der Auswerteeinrichtung 8 und dem Display 2 vorgeschaltet ist. Des Weiteren führt die Auswerteeinrichtung 8 in der Datenbank 11 eine Zuordnung der erfassten Betriebsgröße S₃ mit dem in der Datenbank 11 hinterlegten Abbildungen 12₁ bis 12ₙ durch. Durch die Auswerteeinrichtung 8 erfolgt somit eine Auswahl aus den hinterlegten Abbildungen 12₁ bis 12ₙ in Abhängigkeit von der Betriebsgröße S₃, die anschließend an das Display 2 weitergeleitet ist. Jede der Abbildungen 12₁ bis 12n ist als eine Art Fotografie oder dyniasche Bildsequenz ausgestaltet und entspricht in ihrer grafischen Darstellung beispielsweise einer Geschwindigkeit- oder Drehzahlanzeige für die Werkzeugmaschine 7.

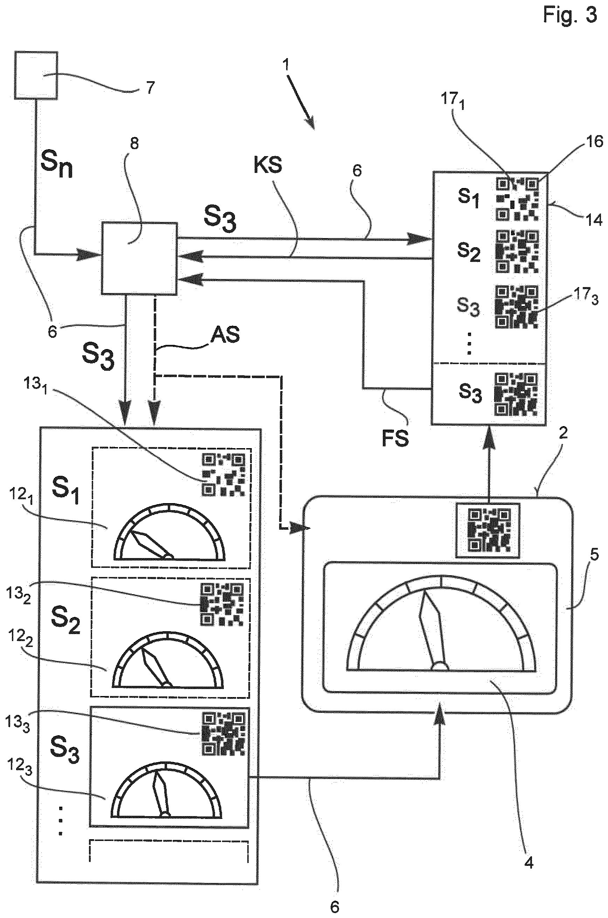

Darüber hinaus sind auf jeder Abbildung 12₁ bis 12ₙ unterschiedliche Kontrollsymbole 13₁ bis 13ₙ aufgedruckt. Diese Kontrollsymbole 13₁ bis 13ₙ können als sogenannte RGB-Felder, als Flächen oder wie in Figur 3 vorgesehen als sogenannte QR-Codes ausgestaltet sein. Für jede übermittelte Betriebsgröße S₁ bis Sₙ sind somit entsprechend zugeordnete Kontrollsymbole 13₁ bis 13ₙ auf jeder der Abbildungen 12₁ bis 12ₙ vorhanden.

Durch die Übermittlung der entsprechenden Abbildung 12₁ bis 12ₙ, beispielsweise 12₃ in dem gezeigten Ausführungsbeispiel, an das Display 2 wird demnach die der übermittelten Betriebsgröße S₃ zugeordnete Geschwindigkeit angezeigt, denn diese Symbolik ist fluchtend im Bereich des Bildschirms 4 vorgesehen und die jeweiligen Kontrollsymbole 13₁ bis 13ₙ sind durch den Rahmen 5 des Displays 2 abgedeckt.

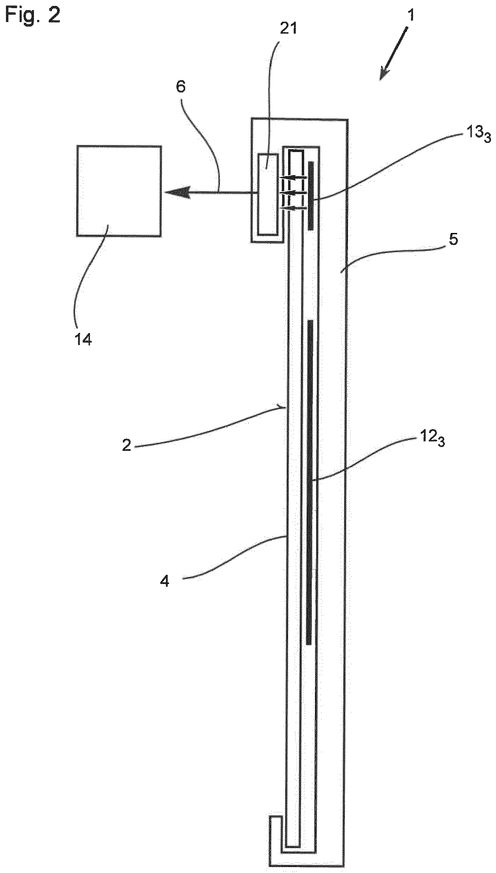

Wie insbesondere aus Figur 2 ersichtlich, ist in dem Rahmen 5 ein Lesegerät 21 vorgesehen, das optische Sensoren aufweist, die fluchtend zu dem jeweiligen Feld der Kontrollsymbole 13₁ bis 13ₙ angeordnet sind. Die jeweiligen Felder der Kontrollsymbole 13₁ bis 13ₙ können dabei unterschiedliche Farbgebungen aufweisen, die der jeweiligen Betriebsgröße S₁ bis Sₙ zugeordnet sind. Diese Farbgebungen werden von den Sensoren des Lesegerätes 21 erkannt und über die elektrische Leitung 6 an das Überwachungsgerät 14 weitergeleitet.

Da durch die Auswerteeinrichtung 8 die erfasste Betriebsgröße S₃ ebenfalls an das Überwachungsgerät 14 weitergeleitet ist, kann in diesem ein Abgleich zwischen dem abgelesenen Kontrollsymbole 13₃ des Displays 2 und einer Vielzahl von Vergleichssymbolen 17₁ bis 17ₙ, die in einer in dem Überwachungsgerät 14 vorgesehenen Datenbank 16 hinterlegt sind, vorgenommen sein. Die Datenbank 16 weist der jeweiligen Betriebsgröße S₁ bis S_{N} zugeordnete Vergleichssymbole 17₁ bis 17ₙ auf, die in ihrer farblichen und geographischen Ausgestaltung mit den jeweiligen Kontrollsymbolen 13₁ bis 13ₙ der Datenbank 11 übereinstimmen. Da die von dem Lesegerät 21 entsprechenden Kontrollsymbole 13₃ an das Überwachungsgerät 14 übermittelt sind, erfolgt in dem Überwachungsgerät 14 ein Abgleich zwischen den dort hinterlegten Vergleichssymbol 17₁ bis 17ₙ. Die Auswerteeinrichtung 8 nimmt während der Übertragung der tatsächlichen Betriebsgröße S₃ eine entsprechende Auswahl vor, so dass aus der Datenbank 16 das jeweilige Vergleichssymbol 17₃ mit dem abgelesenen Kontrollsymbole 13₃ in dem Überwachungsgerät 14 verglichen ist.

Stimmen dabei die Kontrollsymbole 13₃ mit dem Vergleichssymbol 17₃ überein entsteht ein Kontrollsignal KS, das an die Auswerteeinrichtung 8 von dem Überwachungsgerät 14 weitergeleitet ist. Die Vorrichtung 1 funktioniert störungsfrei, denn die Anzeigesituation des Displays 2 stimmt mit der tatsächlichen Betriebsgröße S₃ überein. Sobald sich die Betriebsgröße S₁ bis S_{N} ändert, erfolgt ein Austausch der Abbildungen 12₁ bis 12ₙ sowie eine Veränderung des Vergleichssymbols 17₁ bis 17ₙ in dem Überwachungsgerät 4. Durch die Auswerteeinrichtung 8 erfolgt ein permanenter Vergleich zwischen den Kontrollsymbolen 12₁ bis 12ₙ und der Vergleichssymbolen 17₁ bis 17ₙ. Sollte sich ein Unterschied zwischen dem an das Display 2 übermittelten Kontrollsymbol 13₁ bis 13ₙ und dem Vergleichssymbol 17₁ bis 17ₙ ergeben, entsteht ein entsprechendes Fehlersignal FS, das von dem Überwachungsgerät 14 an die Auswerteeinrichtung 8 übermittelt ist. Ein solches Fehlersignal FS führt unverzüglich dazu, dass das Display 2 durch die Auswerteeinrichtung 8 mittels eines Abschaltsystems deaktiviert wird, so dass ein Benutzer unverzüglich erkennt, dass die Anzeigesituation des Display 2 mit der tatsächlichen Betriebsgröße S₁ bis Sₙ nicht länger übereinstimmt.

Gleichzeitig kann durch die Auswerteeinrichtung 8 ein Neustart bzw. eine Fehlersuche durchgeführt werden. Die Unterbrechungszeiten des Displays 2 können demnach äußerst gering gehalten werden.

## Patentansprüche

1. Verfahren zur Darstellung einer sicherheitsrelevanten Information auf einem Display (2), das mindestens eine elektrisch erfassbare Betriebsgröße (S₁ bis Sₙ) von einer Auswerteeinrichtung (8) erhält, die insbesondere an Fahrzeuge, Werkzeugmaschinen (7) oder elektrischen Geräten angeschlossen ist,
**gekennzeichnet durch** die Verfahrensschritte:
- Zuordnen einer in einer Datenbank (11) hinterlegten Abbildung (12₁ bis 12ₙ) mit der von der Auswerteeinrichtung (8) ermittelten Betriebsgröße (S₁ bis Sn),
- Weiterleiten der Abbildung (12₁ bis 12ₙ) an das Display (2), gegebenenfalls Verändern des zur Verfügung gestellten Abbildung (12₁ bis 12ₙ) aus der Datenbank (11) in Abhängigkeit von Veränderungen der Betriebsgröße (S₁ bis Sₙ),
- Übermitteln der Betriebsgröße (S₁ bis Sₙ) **durch** die Auswerteeinrichtung (8) an ein Überwachungsgerät (14),
- Ablesen von Kontrollsymbolen (13₁ bis 13ₙ) **durch** das Überwachungsgerät (14), die auf den Abbildungen (12₁ bis 12ₙ) vorgesehen sind und die einer bestimmten Betriebsgröße (S₁ bis Sₙ) zugeordnet sind und
- Vergleichen der von der Abbildung (12₁ bis 12ₙ) abgelesenen Kontrollsymbole (13₁ bis 13ₙ) mit einer in dem Überwachungsgerät (14) hinterlegten Vergleichssymbol (17₁ bis 17ₙ) bezogen auf die jeweilige tatsächliche Betriebsgröße (S₁ bis Sₙ).

2. Verfahren nach Anspruch 1,
**dadurch gekennzeichnet,**
**dass** durch die Überprüfung der Kontrollsymbole (13₁ bis 13ₙ) durch das Überprüfungsgerät (14) eine Fehlermeldung generierbar ist, wenn die abgelesene Kontrollsymbole (13₁ bis 13ₙ) von den zugehörigen Vergleichssymbol (17₁ bis 17ₙ) des Überwachungsgerätes (14) abweichen.

3. Vorrichtung (1) zur Durchführung des vorgenannten Verfahrens, bestehend aus einem Display (2), durch das mindestens eine Betriebsgröße (S₁ bis Sₙ) visuell abgebildet ist, und aus einer Auswerteeinrichtung (8), durch die die Betriebsgröße (S₁ bis Sₙ) erfasst und die elektrisch mit dem Display (2) verbunden ist;
**dadurch gekennzeichnet,**
**dass** zwischen der Auswerteeinrichtung (8) und dem Display (2) eine Datenbank (11) zwischengeschaltet ist, in der für jede Betriebsgröße (S₁ bis Sₙ) eine Abbildung (12₁ bis 12ₙ) hinterlegt ist,
**dass** jede der Abbildungen (12₁ bis 12ₙ) ein Kontrollsymbol (13₁ bis 13ₙ) aufweist, das der eingelesenen Betriebsgröße (S₁ bis Sₙ) zugeordnet ist,
**dass** die Auswerteeinrichtung (8) elektrisch mit einem Überwachungsgerät (15) verbunden ist, das von der Auswerteeinrichtung (8) die tatsächliche elektrische Betriebsgröße (S₁ bis Sₙ) erhält,
**dass** die mit der übermittelten Betriebsgröße (S₁ bis Sₙ) übereinstimmende Abbildung (12₁ bis 12ₙ) an das Display (2) weitergeleitet ist,
**dass** in dem Überwachungsgerät (14) eine Datenbank (16) hinterlegt ist, die für jede eingegebene Betriebsgröße (S₁ bis Sₙ) ein Vergleichssymbol (17₁ bis 17ₙ) aufweist, das jeweils mit dem Kontrollsymbol (13₁ bis 13ₙ) des Displays (2) in dem Überwachungsgerät (14) verglichen ist.

4. Vorrichtung nach Anspruch 3,
**dadurch gekennzeichnet,**
**dass** die Überwachung des jeweils auf dem Bildschirm (4) des Displays (2) angezeigter Abbildung (12₁ bis 12ₙ) durch das Überwachungsgerät (14) permanent durchgeführt ist und dass bei einer Abweichung zwischen dem Kontrollsymbol (13₁ bis 13ₙ) des Bildschirms (4) und dem Vergleichssymbols des Überwachungsgerätes (14) eine Fehlermeldung, ein Not-aus-Signal und/oder eine sonstige Signalübermittlung, insbesondere die Abschaltung des Bildschirms (4), erfolgt.

5. Vorrichtung nach Anspruch 3 oder 4,
**dadurch gekennzeichnet,**
**dass** die Kontrollsymbole (13₁ bis 13ₙ) der jeweiligen Abbildung (12₁ bis 12ₙ) in dem Randbereich der Abbildung (12₁ bis 12ₙ) dargestellt sind und dass der Randbereich der jeweiligen Abbildung (12₁ bis 12ₙ) von dem Rahmen (5) des Displays (4) verdeckt ist.

6. Vorrichtung nach einem der Ansprüche 3 bis 5,
**dadurch gekennzeichnet,**
**dass** im Rahmen (5) des Displays (2) eine Ausleseeinrichtung (21) vorgesehen ist, die elektrisch mit dem Überwachungsgerät (14) verbunden ist.

7. Vorrichtung nach einem der Ansprüche 3 bis 6,
**dadurch gekennzeichnet,**
**dass** die Kontrollsymbole (13₁ bis 13ₙ) als Pigmente (QR-Code), Flächen und/oder sonstigen optisch lesbaren Elementen, vorzugsweise RGB-Felder, ausgestaltet sind.

8. Vorrichtung nach Anspruch 7,
**dadurch gekennzeichnet,**
**dass** die Kontrollsymbole (13₁ bis 13ₙ) mit unterschiedlichen Farben versehen sind.

9. Vorrichtung nach Anspruch 6,
**dadurch gekennzeichnet,**
**dass** die Ausleseeinrichtung (21) aus RGB-Sensoren, Laserlichtsensoren oder sonstigen optischen Leseelementen besteht, die im Rahmen (5) des Displays (2) angeordnet und die fluchtend zu den jeweiligen Kontrollsymbolen (13₁ bis 13n) ausgerichtet sind.

10. Vorrichtung nach einem der Ansprüche 3 bis 9,
**dadurch gekennzeichnet,**
**dass** die Kontrollsymbole (13₁ bis 13ₙ) aus einer Vielzahl von RGB-Feldern mit unterschiedlicher Farbgebung bestehen.
